Europäisches Patentamt

European Patent Office

Office européen des brevets

(11) Publication number: **0 195 644**
**B1**

## (12) EUROPEAN PATENT SPECIFICATION

(45) Date of publication of patent specification: **08.08.90**

(21) Application number: **86301951.9**

(22) Date of filing: **18.03.86**

(51) Int. Cl.⁵: **B 65 G 35/08,** B 60 L 13/00,
B 61 B 13/12

(54) **Truck apparatus.**

(30) Priority: **18.03.85 JP 54028/85**

(43) Date of publication of application:
**24.09.86 Bulletin 86/39**

(45) Publication of the grant of the patent:
**08.08.90 Bulletin 90/32**

(84) Designated Contracting States:
**DE FR GB**

(56) References cited:
**EP-A-0 102 551**
**DE-A-2 908 199**
**US-A-3 834 316**

(73) Proprietor: **Shinko Electric Co. Ltd.**
**12-2, Nihonbashi 3-chome**
**Chuo-ku Tokyo 103 (JP)**

(72) Inventor: **Yamamoto, Kiwamu**
**642-15, Ujiuratacho**
**Ise-shi Mie-ken (JP)**
Inventor: **Tanaka, Tsuyoshi**
**20-63, Kuroda Ureshinocho**
**Ichishi-gun Mie-ken (JP)**
Inventor: **Takasu, Toshio**
**20-1-105, Shimonocho**
**Ise-shi Mie-ken (JP)**

(74) Representative: **Dealtry, Brian et al**
**Eric Potter & Clarkson St. Mary's Court St.**
**Mary's Gate**
**Nottingham NG1 1LE (GB)**

Courier Press, Leamington Spa, England.

## Description

The present invention relates to a truck apparatus which may be used in transferring materials in factories, storehouses, etc.

It is known from DE—A—2908199 to provide a truck having a plurality of support wheels and guide wheels rotatably attached to the truck, support means, disposed along a line of travel for the truck, for supporting the truck to vertically and horizontally guide the truck along the line of travel by engaging with the support wheels and guide wheels, the support means comprising a support rail member for supporting and vertically guiding the support wheels a horizontal guide rail member for horizontally guiding the guide wheels by contacting the guide wheels, and drive means for driving the truck along the line of travel.

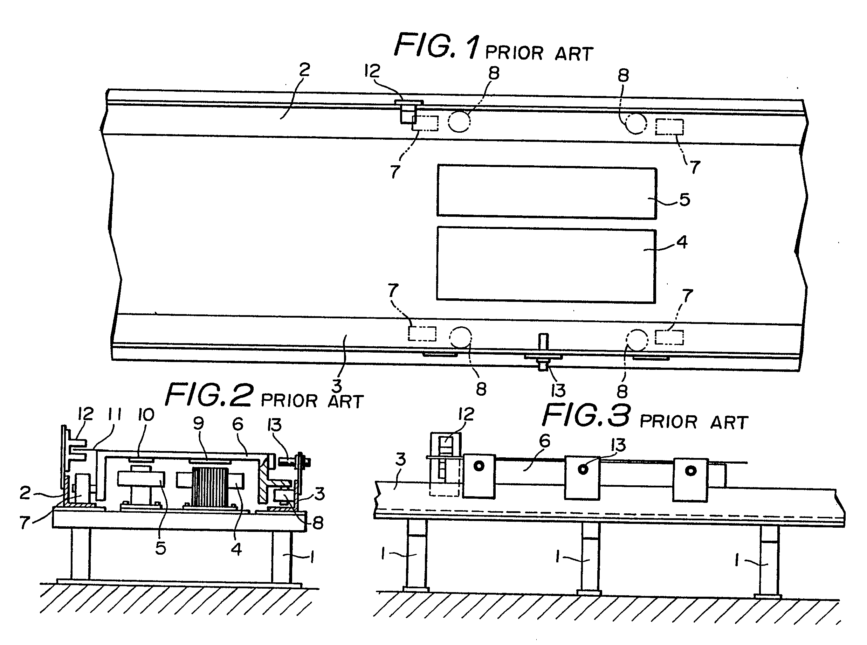

Figures 1 to 3 illustrate another typical example of the prior art truck apparatus, in which reference numeral 1 designates a supporting frame disposed along a line of travel of a truck 6. The supporting frame 1 has parallel rails 2 and 3 mounted on it along the line of travel. Further, the supporting frame 1 is provided on its top with a primary unit 4 of a linear induction motor and with a primary unit 5 of an electromagnetic brake. The number and positions of the units 4 and 5 are determined to correspond to stations where materials are loaded and unloaded to the truck 6. The truck 6 has substantially a channel shape with its inside directed downwards. It has pairs of support wheels 7 and guide wheels 8 rotatably attached to it and brought into contact with the rails 2 and 3 so that the truck 6 is movable along the line of travel. The truck 6 is provided with a conductor member 9 as a secondary unit of the linear induction motor and with an iron plate 10 of a secondary unit of the electromagnetic brake. The truck 6 further has a split plate 11. One rail 12 has a speed sensor 12 mounted on it. The speed sensor 12 is a photodetector detecting slits of the slit plate 11 for generating signals representing the speed of the truck 6. On the other hand, the other rail 3 has a position sensor 13 which is a reflection-type photosensor for detecting the position of the truck 6. With such a construction, the truck 6 is accelerated or decelerated with the linear induction motor by providing a thrust to the secondary unit 9 of the linear induction motor from the primary unit 4 thereof. The truck 6 is stopped by attracting the secondary plate 10 with the primary unit 5 of the electromagnetic brake. In these events, an electronic control unit (not shown) controls the movement of the truck 6 by controlling supply of power to the primary unit 4 and 5 according to signals from the speed sensor 12 and the position sensor 13.

Since the linear induction motor and the electromagnetic brake as drive units are bolted to the supporting frame 1 and since sensors 12 and 13 are also bolted to the rails 2 and 3, the prior art truck apparatus has the following disadvantages. Firstly, in adding another station or changing the position of a station already built, additional attaching bolts for bolt joint of primary units of the induction motor and the electromagnetic brake must be formed in the frame 1. Secondly, it is laborious to adjust the positions of the speed sensor 12 and the position sensor 13 relative to the position of the primary unit 4 of the linear induction motor according to a travel pattern of the truck 6. Thirdly, the supporting frame 1 is required to have rather high rigidity since it is subjected to reactions due to electromagnetic force exerted from drive units, i.e., the primary units 4 and 5, on the truck. Lastly, mounting mechanisms of the drive units, such as attaching holes for bolts, must have a rather high accuracy in position and size since relative positions of the rails 2 and 3 and the primary units 4 and 5 must be held at a rather high degree.

Accordingly, it is an object of the present invention to provide a truck apparatus which is less laborious in installing additional drive units or in changing the positions of the drive units already disposed than the prior art truck apparatus.

It is another object of the present invention to provide a truck apparatus in which the supporting frame of the truck is required to have rather less rigidity than the prior art truck apparatus.

A still another object of the present invention is to provide a truck apparatus which is required to have rather smaller accuracy in forming mounting mechanisms of the drive units than the prior art apparatus.

According to the present invention there is provided a truck apparatus comprisig a truck having a plurality of support wheels and guide wheels, both wheels being rotatably attached to the truck; support means, disposed along a line of travel of the truck, including a support rail member for supporting and vertically guiding the support wheels and a horizontal guide rail member for horizontally guiding the guide wheels by contacting the guide wheels and drive means for driving the truck along the line of travel characterised in that the drive means is mounted on the support means so that the drive means is slidable and can be fixed to the support means in any position along the line of travel.

Reference is now made to the accompanying drawings, in which:—

Figure 1 is a fragmentary plan view of a conventional truck apparatus with a truck omitted;

Figure 2 is a front view partially cutaway of the conventional truck apparatus of figure 1;

Figure 3 is a fragmentary side-elevational view of the conventional truck apparatus of figure 1;

Figure 4 is a front view partially cutaway of a truck apparatus according to the present invention;

Figure 5 is an enlarged cross-sectional view of a rail of figure 4;

Figure 6 is a fragmentary plan view of the truck apparatus of figure 4 with the truck and sensors omitted;

Figure 7 is an enlarged perspective view of a slit plate and the bracket holding the speed sensor of figure 4

Figure 8 is a side-elevational view of a shock absorber mounted on opposite ends of the rail of figure 4; and

Figure 9 is a cross-sectional view of a portion of a modified form of the rail in Figure 5.

Detailed Description of the Preferred Embodiments

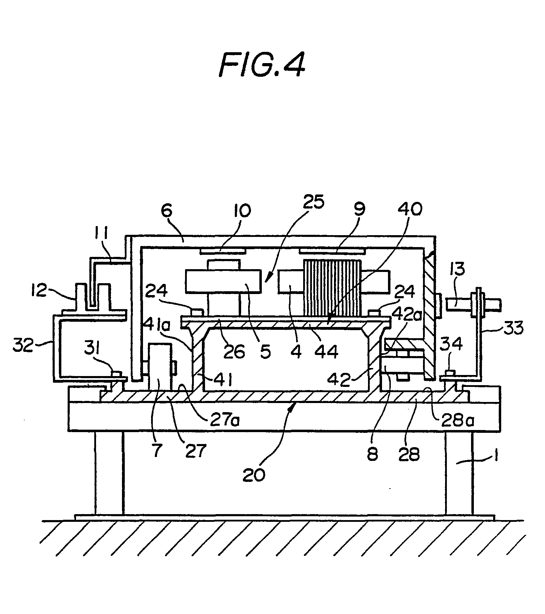

In Figures 4 to 9, parts in Figures 1 to 3 are designated by like reference numerals and thus description thereof are omitted.

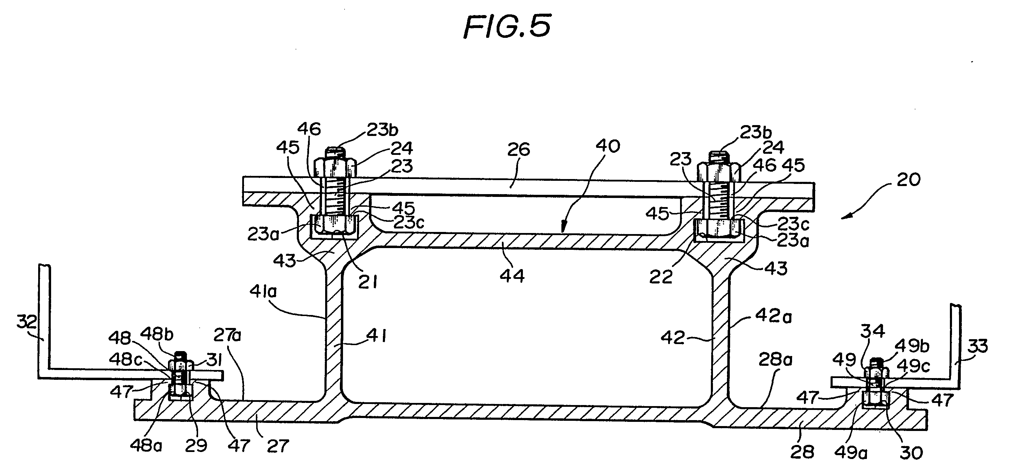

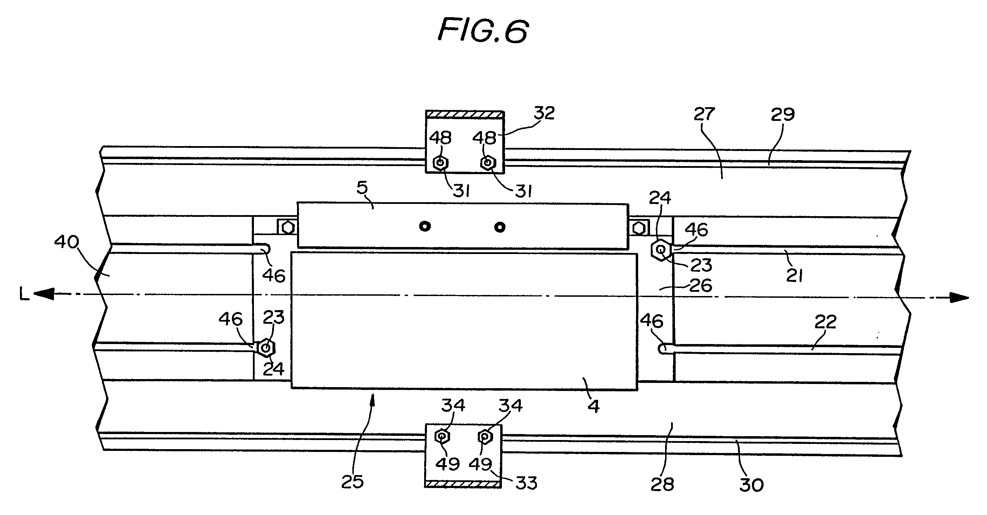

Figure 4 shows a preferred embodiment of the present invention having a rail 20 as supporting means which may be produced by extrusion of metal such as an aluminum alloy. The rail 20 is disposed along the line L (see Figure 6) of travel of the truck 6, and has a tubular horizontal guide rail 40 which includes a pair of parallel side walls 41 and 42 each having a top end 43, and a top wall 44 bringing the top ends 43 of the side walls 41 and 42. The side walls 41 and 42 have guide surfaces 41a and 42a respectively. The guide surfaces 41a and 42a horizontally guide the guide wheels 8 of the truck 6 by contacting the guide wheels 8. As shown in Figure 5, the top wall 44 has a pair of first engaging grooves 21 and 22 formed in the opposite peripheries thereof, so that the grooves 21 and 22 extend along the line L of travel. The grooves 21 and 22 each have an inverted T-shaped cross-section and a pair of first engaging walls 45 defining an opening thereof. Into each of grooves 21 and 22 a head 23a of a bolt 23 slidably fits, and the rear face 23c of the head 23a is brought into engagement with the engaging walls 45 when the end portion 23b of the bolt 23 is attached to the drive unit 25 threadedly engaging with a nut 24. In this embodiment, the drive unit 25 has a mount plate 26 on which the primary unit 4 of the linear induction motor and the primary unit 5 of the electromagnetic brake are mounted. As illustrated in Figure 6, the mount plate 26 has two pairs of notches 46 formed in the oppposite ends thereof so that the end portion 23b of a corresponding bolt 23 passes through each notch 46. The plate 26 is fastened to the horizontal guide rail 40 with four pairs of bolts 23 and nuts 24 although only two pairs thereof are shown in Figure 6.

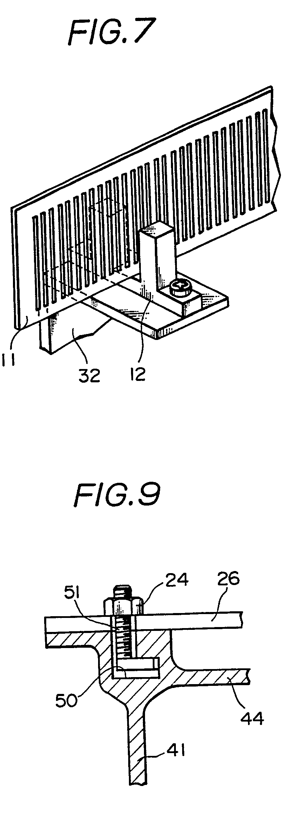

Returning to Figure 4, the rail 20 further has a pair of support rails 27 and 28 integrally formed with respective side walls 41 and 42 of the horizontal guide rail 40. The support rails 27 and 28 have support surfaces 27a and 28a respectively. The support surfaces 27a and 28a support and guide the support wheels 7 by contacting the support wheels 7. The support rails 27 and 28 have second engaging grooves 29 and 30 respectively (see Figure 5). The second grooves 29 and 30 are formed in the peripheries of the support rails 27 and 28 respectively, so that the grooves 29 and 30 extend along the line L of travel. The grooves 29 and 30 each have an inverted T-shaped cross-section and a pair of second engaging walls 47 defining an opening thereof. Into one second groove 29 a head 48a of a bolt 48 fits, and the end portion 48b of the bolt 48 is attached to a bracket 32 holding the speed sensor 12 (see Figure 7) thereon by threadedly engaging with a nut 31. THus, the rear face 48c of of the head 48a is brought into engagement with the engaging walls 47 in the same manner as the rear face 23c of the head 23a of the bolt 23 brought into engagement with the walls 45. On the other hand, into the other second groove 30 a head 49a of a bolt 49 fits, and the end portion 49b of the bolt 49 is attached to a bracket 33 holding the position sensor 13 thereon by threadedly engaging with the nut 34. Thus, the rear face 49c of the head 49a is brought into engagement with the engaging walls 47 of the groove 30 in the same manner.

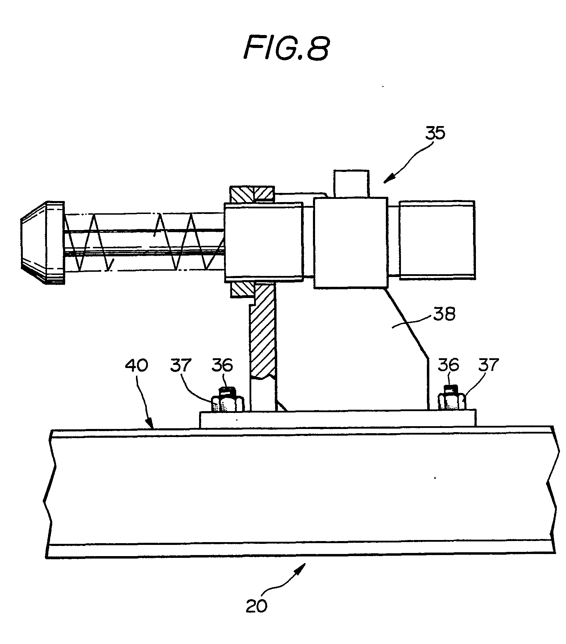

As further seen in Figure 8, the rail 20 is provided on its opposite ends with shock absorbers 35. Each shock absorber 35 has a bracket 38 fastened to the horizontal guide rail 40 by means of bolts 36 attached to the engaging walls of 45 of the first engaging grooves 21 and 22 with nuts 37 as in the same manner as the mount plate 26.

Figure 9 shows a modified form of the first grooves 21 and 22 in which first engaging groove 50 has an L-shaped cross-section so that an L-shaped engaging member 51 fits to the groove 50. The second engaging grooves 29 and 30 may also have an L-shaped cross-section.

The drive unit 25, the speed sensor 12 and the position sensor 13 are slidable on the rail 20 by loosening the threaded connection between bolts and nuts, which fasten them on the rail 20, and may be remounted to desired positions on the rail 20 by retightening the bolt-and-nut connection. Thus, it is possible to install additional drive units and sensors or to change and to adjust the positions of the drive unit 25 and so on already mounted without forming additional attaching holes in the rail 20. Although a pair of parallel rails of the conventional apparatus must have their distance adjusted when they are mounted on the frame 1, no such adjustment is necessary in the present invention. It is also unnecessary to adjust the space between the drive unit 25 and the truck 6, since the drive unit 25 is fastened to the rail 20. Furthermore, the supporting frame 1 of the truck apparatus according to the invention is required to have less rigidity than that of the conventional one, because it is subjected to less reactions due to electromagnetic force exerted from the drive unit 25 on the truck 6.

**Claims**

1. A truck apparatus comprising a truck having a plurality of support wheels and guide wheels, both wheels being rotatably attached to the truck; support means, disposed along a line of travel of the truck, including a support rail member (27, 28) for supporting and vertically guiding the support wheels (7) and a horizontal guide rail member (40) for horizontally guiding the guide wheels (8) by contacting the guide wheels and drive means for driving the truck along the line of travel characterised in that the drive means (25) is mounted on the support means (20) so that the drive means is slidable and can be fixed to the support means in any position along the line of travel.

2. A truck apparatus as recited in Claim 1, wherein said first mounting means comprises: first means (44) for defining a first engaging groove (21,. 22; 50) in the horizontal guide rail member (40) along the line of travel of the truck, the first engaging groove (21, 22; 50) having a first engaging wall (45); and first fastening means (23, 24; 51, 24) for releasably fastening the drive means to the engaging wall of the first engaging groove, the drive means (25) being slidable when the first fastening means (23, 24; 51, 25, 24) is released.

3. A truck apparatus as recited in Claim 2, further comprising means (12, 13) for detecting a position and a speed of the truck and mounting means for mounting the detecting means (12, 13) to the support rail member (27, 28) the mounting means including a second engaging groove (29, 30) formed in the support rail member (27, 28) along the line of travel of the truck, the second engaging groove (29, 30) having a second engaging wall (47); and second fastening means (48, 49, 31) for releasably fastening the detecting means (12, 13) to the engaging wall (47) of the second engaging groove (29, 30), the detecting means (12, 13) being slidable when the second fastening means (48, 49, 31) is released.

4. A truck apparatus as recited in Claim 2 or 3, wherein the first fastening means (23, 24) comprises: a first engaging member (23) having approximate end (23b) and free engaging end (23a); and attaching means (24) for detachable attaching the proximal end (23b) of the first engaging member (23) to the drive means (25), and wherein the first engaging groove (21, 22) is formed so that the engaging end (23a) of the first engaging member (23) engages with the first engaging wall (45) thereof.

5. A truck apparatus as recited in Claim 4, wherein the support rail member (27, 28) and the guide rail member (40) are integrally formed.

6. A truck apparatus as recited in Claim 5, wherein the guide rail member (40) comprises: a pair of parallel side walls (41, 42) each having a top end (43); and a top wall (44) bringing the top ends (43) of the side walls (41, 42), each side wall (41, 42) having a guide surface (41a, 42a) contacting the guide wheels (8), and wherein the first engaging groove (21, 22) is formed in the top wall (44) of the guide rail member (40).

7. A truck apparatus as recited in Claim 6, wherein the support means comprises a pair of the support rails (27, 28) integrally formed with respective side walls (41, 42) of the guide rail member (40).

8. A truck apparatus as recited in Claim 7, wherein the first groove (21, 22) has a generally inverted T-shaped cross-section and a pair of the engaging walls (45), and wherein the engaging end (23a) of the first engaging member (23) has a shape to engage with the engaging walls (45) of the first groove (21, 22).

9. A truck apparatus as recited in Claim 7, wherein the first groove (50) has a generally inverted L-shaped cross-section, and wherein the first engaging member (51) has generally an L shape.

**Patentansprüche**

1. Förderanlage mit einem Föderwagen, der mehrere Stützräder und Führungsräder aufweist, die alle drehbar am Förderwagen angebracht sind; einem Stützmittel, das längs einer Laufbahn des Förderwagens angeordnet ist und eine Stützschiene (27, 28) zum Stützen und vertikalen Führen der Stützräder (7) und eine horizontale Führungschiene (40) zum horizontalen Führen der Führungsräder (8) durch Anlage an den Führungsrädern aufweist; und einem Antriebsmittel zum Antreiben des Förderwagens längs der Laufbahn, dadurch gekennzeichnet, daß das Antriebsmittel (25) so an dem Stützmittel (20) montiert ist, daß das Antriebsmittel gleitend verschiebbar ist und am Stützmittel in irgendeiner Position längs der Laufban befestigt werden kann.

2. Förderanlage nach Anspruch 1, bei der das erwähnte erste Montagemittel aufweist: ein erstes Mittel (44) zum Begrenzen einer ersten Eingriffsnut (21, 22; 50) in der horizontalen Führungsschiene (40) längs der Laufbahn des Förderwagens, wobei die erste Eingriffsnut (21, 22; 50) eine erste Anlagewand (45) aufweist; und ein erstes Befestigungsmittel (23, 24; 51, 24) zum lösbaren Befestigen des Antriebsmittels an der Anlagewand der ersten Eingriffsnut, wobei das Abtriebsmittel (25) gleitend verschiebbar ist, wenn das erste Befestigungsmittel (23, 24; 51, 24) gelöst ist.

3. Förderanlage nach Anspruch 2, die ferner aufweist; eine Mittel (12, 13) zum Feststellen der Position und Geschwindigkeit des Förderwagens und ein Montagemittel zum Montieren des Feststellmittels (12, 13) an der Stützschiene (27, 28), wobei das Montagemittel eine zweite Eingriffsnut (29, 30) aufweist, die in der Stützschiene (27, 28) längs der Förderbahn des Förderwagens ausgebildet ist, wobei die zweite Einegriffsnut (29, 30); eine zweite Anlagewand (47) aufweist; und ein zweites Befestigungsmittel (48, 49, 31) zum lösbaren Befestigen des Feststellmittels (12, 13) an der Anlagewand (47) der zweiten Eingriffsnut (29, 30), wobei das Feststellmittel (12,13) gleitend verschiebbar ist, wenn das zweite Befestigungsmittel (48, 49, 31) gelöst ist.

4. Förderanlage nach Anspruch 2 oder 3, bei der das erste Befestigungsmittel (23, 24) aufweist; ein erstes Anlageglied (23) mit einem nahen Ende (23b) und einem freien Anlageende (23a); und ein Anbringungsmittel (24) zum lösbaren Anbringen des nahen Endes (23b) des ersten Anlagegliedes (23) an dem Antriebsmittel (25), und bei der die erste Eingriffsnut (21, 22) so geformt ist, daß das Anlageende (23a) des ersten Anlagegliedes (23) mit ihrer ersten Anlagewand (45) zur Anlage kommt.

5. Förderanlage nach Anspruch 4, bei der die Stützschiene (27, 28) und die Führungsschiene (40) einteilig ausgebildet sind.

6. Förderanlage nach Anspruch 5, bei der die Führungschiene (40) aufweist: zwei parallele Seitenwände (41, 42), die jeweils ein oberes Ende (43) aufweisen; und eine obere Wand (44), die die oberen Enden (43) der Seitenwände (41, 42) überbrückt, wobei jede Seitenwand (41, 42) ein Führungsfläche (41a, 42a) auf ihrer Außenseite aufweist und die Führungsfläche (41a, 42a) die Führungsräder (8) berührt, und bei der die erste Eingriffsnut (21, 22) in der oberen Wand (44) der Führungsschiene (40) ausgebildet ist.

7. Förderanlage nach Anspruch 6, bei der das Stützmittel zwei der Stützschienen (27, 28) aufweist, die einteilig mit den entsprechenden Seitenwänden (41, 42) der Führungsschiene (40) ausgebildet sind.

8. Förderanlage nach Anspruch 7, bei der die erste Nut (21, 22) einen im wesentlichen umgekehrt T-förmigen Querschnitt und zwei der Anlagewände (45) aufweist und bei der das Anlageende (23a) des ersten Anlagegliedes (23) eine solche Form aufweist daß es mit den Anlagewänden (45) der ersten Nut (21, 22) zur Anlage kommt.

9. Förderanlage nach Anspruch 7, bei der die erste Nut (50) einen im wesentlichen umgekehrt L-förmigen Querschnitt aufweist und das erste Anlageglied (51) im wesentlichen L-förmig ist.

**Revendications**

1. Installation à chariot comportant: un chariot ayant une pluralité de roues porteueses et de roues de guidage ces deux types de roues étant liées à rotation au chariot, des moyens d'appui disposés le long d'une ligne de déplacement du chariot, ces moyens comprenant un élément de rail porteure (27, 28) pour porter les roues porteuses (7) et les guider verticalement ainsi qu'un élément de rail de guidage horizontal (40) pour guider horizontalement les roues de guide (8) en venant en contact avec ces roues de guidage et des moyens d'entraînement pour entraîner le chariot le long de la ligne de déplacement, caractérisée en ce que les moyens d'entraînement (25) sont montés sur les moyens d'appui (20) de manière que les moyens d'entraînement puissent coulisser et puissent être fixés sur les moyens d'appui dans une position quelconque le long de la ligne de déplacement.

2. Installation à chariot selon la revendication 1, dans laquelle lesdits premiers moyens de montage comportent: des premiers moyens (44) pour définir une première rainure d'engagement (21, 22; 50) dans l'élément de rail de guidage horizontal (40) le long de la ligne de déplacement du chariot, la première rainure d'engagement (21, 22; 50) présentant une première paroil d'engagement (45), et des premiers moyens de fixation (23, 24; 51, 24) pour fixer de façon amovible les moyens d'entraînement sur la paroi d'engagement de la première rainure d'engagement, les moyens d'entraînement (25) pouvant coulisse quand les premiers moyens de fixation (23, 24; 51, 25, 24) sont libéres.

3. Installation à chariot selon la revendication 2, comportant en outre des moyens (12, 13) pour détecter la position et la vitesse du chariot et des moyens de montage pour le montage des moyens de détection (12, 13) sur l'élément de rail porteur (27, 28) les moyens de montage comprenant une seconde rainure d'engagement (29, 30) formée dans l'élément de rail porteur (27, 28) le long de la ligne de déplacement du chariot, la seconde rainure d'engagement (29, 30) présentant une seconde paroi d'engagement (47) et des seconds moyens de fixation (48, 49, 31) pour fixer de façon amovible les moyens de détection (12, 13) sur la paroi d'engagement (47) de la seconde rainure d'engagement (29, 30), les moyens de détection (12, 13) pouvant coulisser quand les seconds moyens de fixation (48, 49, 31) sont libérés.

4. Installation à chariot selon la revendication 2 ou 3, dans laquelle les premiers moyens de fixation (23, 24) comportent: un premier élément d'engagement (23) ayant une extrémité rapprochée (23b) et un extrémité d'engagement libre (23a), et des moyens d'assemblage (24) pour relier de façon amovible l'extremité rapprochée (23b) du premier élément d'engagement (23;) aux moyens d'entraînement (25), et dans laquelle la première rainure d'engagement (21, 22) est constituée de manière que l'extremité d'engagement (23a) du premier élément d'engagement (23) s'engage sur la première paroi d'engagement (45) de cette rainure.

5. Installation à chariot selon la revendication 4, dans laquelle l'élément de rail porteur (27, 28) et l'élément de rail de guidage ((40) sont formés en une seule pièce.

6. Installation à chariot selon la revendication 5, dans laquelle l'élément de rail de guidage (40) comportante: deux parois latérales parallèles (41, 42) comportant chacune une extrémité supérieure (43) et une paroi supérieure (44) reliant les extrémités supérieures (43) des parois latérales (41, 42), chaque paroi latérale (41, 42) présentant une surface de guidage (41a, 42a) sur son côté extérieur, la surface de guidage (41a, 42a) venant en contact avec les routes de guidage (8), et dans laquelle la première rainure d'engagement (21, 22) est formée dans la paroi supérieure (44) de l'élément de rail de guidage (40).

7. Installation à chariot selon la revendication 6, dans laquelle les moyens d'appui comportent deux rails porteurs (27, 28) constitués en une seule pièce avec les parois latérales respectives (41, 42) de élément de rail de guidage (40).

8. Installation à chariot selon la revendication 7, dans laquelle la premierè rainure (21, 22) a une section transversale sensiblement en forme de T renversé et deux paroi engagement (45), et dans laquelle l'extrémité d'engagement (23a) du premier élément d'engagement (23) est conformée pour s'engager dans les parois d'engagement (45) de la première rainure (21, 22).

9. Installation à chariot selon la revendication 7, dans laquelle la première rainure (50) à une section transversale sensiblement en forme de L renversé, et dans laquelle le premier élément d'engagement (51) est sensiblement en forme de L.

*FIG. 1* PRIOR ART

*FIG.2* PRIOR ART

*FIG.3* PRIOR ART

EP 0 195 644 B1

# FIG.4

FIG.5

FIG.6

## FIG.7

## FIG.9

## FIG.8